# EUROPEAN PATENT APPLICATION

(11) **EP 3 139 331 A1**
(43) Date of publication of application: **08.03.2017**
(21) Application number: 14892850.0
(22) Date of filing: 20.05.2014
(51) Int. Cl.: G06Q 30/00, G06Q 30/02

(54) **ADVERTISEMENT TEMPLATE CONFIGURATION METHOD, SERVER AND SYSTEM**

(71) Applicant: Huawei Technologies Co. Ltd., Shenzhen, Guangdong 518129 (CN)
(72) Inventor: QIN, Tong, Shenzhen Guangdong 518129 (CN)
(74) Representative: Körber, Martin Hans
(86) International application number: PCT/CN2014/077867
(87) International publication number: WO 2015/176226

(57) **Abstract**

The present invention discloses a method for configuring an advertisement template, a server, and a system. The method for configuring an advertisement template in the present invention includes: acquiring, by a server, advertisement template code of a customized advertisement template and parameter used by the template from a service apparatus, where the advertisement template code provides a rule system of the advertisement template, and the parameter used by the template provide specific parameter values that need to be used in the advertisement template; generating, by the server, the customized advertisement template according to the advertisement template code and the parameter used by the template, and saving the customized advertisement template; and generating, by the server, a template identifier corresponding to the customized advertisement template, and returning the template identifier to the service apparatus, where the template identifier is used to identify the customized advertisement template. In this way, functions of newly adding and modifying an advertisement template can be implemented, so that an advertisement form of advertisement placement is more flexible and diversified.

## Description

### TECHNICAL FIELD

The present invention relates to the field of advertisement technologies, and in particular, to a method for configuring an advertisement template, a server, and a system.

### BACKGROUND

As mobile applications increase, more applications start to perform advertisement placement in combination with advertisement platforms, and advertisement presentation forms are diversified, including an image, a text, an animation, audio, a video, a subsequent advertisement action effect, and the like.

During advertisement placement, generally, a service apparatus creates an advertisement slot on a server and provides a size, a location, and a supported advertisement template of the advertisement slot. An advertiser specifies an advertisement slot and creates an advertisement task, specifies an advertisement placement condition and advertisement audience, and uploads an advertisement material according to the advertisement template. An advertisement software development kit (Software Development Kit, SDK) placed in an application of a terminal requests an advertisement from the server and carries parameters such as an identifier of the advertisement slot and a terminal feature; and the server returns appropriate advertisement code and the advertisement code is displayed by the advertisement SDK.

An existing advertisement placement system depends on a built-in advertisement template of the system, resulting in that the system is used inflexibly and no new advertisement form can be expanded.

### SUMMARY

A technical problem mainly resolved by the present invention is to resolve a technical problem that, in the prior art, an advertisement placement system depends only on a built-in advertisement template of the system, resulting in that the system is used inflexibly and no new advertisement form can be expanded.

In view of this, the present invention provides a method for configuring an advertisement template, a server, and a system, to newly add an advertisement template, so that an advertisement type and a presentation form are not limited to a built-in advertisement template of the system. Therefore, the advertisement placement system can be used more flexibly and can adapt to different advertisement forms.

According to a first aspect, an embodiment of the present invention provides a method for configuring an advertisement template, where the method includes: acquiring, by a server, advertisement template code of a customized advertisement template and a parameter used by the template from a service apparatus, where the advertisement template code provides a rule system of the advertisement template, and the parameter used by the template provide specific parameter values that need to be used in the advertisement template; generating, by the server, the customized advertisement template according to the advertisement template code and the parameter used by the template, and saving the customized advertisement template; and generating, by the server, a template identifier corresponding to the customized advertisement template, and returning the template identifier to the service apparatus, where the template identifier is used to identify the customized advertisement template.

With reference to the first aspect, in a first possible implementation manner of the first aspect, the step of generating, by the server, the customized advertisement template according to the advertisement template code and the parameter used by the template, and saving the customized advertisement template includes: generating, by the server, a parameter list according to the parameter used by the template, where the parameter list includes at least parameter identifiers and parameter names; parsing the parameter list to generate a material editing interface; and saving the material editing interface, the advertisement template code, and the parameter list together as the customized advertisement template.

With reference to the first aspect or the first possible implementation manner of the first aspect, in a second possible implementation manner of the first aspect: the step of acquiring, by a server, advertisement template code of a customized advertisement template and parameter used by the template from a service apparatus includes: receiving, by the server, a template file from the service apparatus, and parsing the template file to obtain the advertisement template code of the customized advertisement template and the parameter used by the template; or acquiring, by the server from an operation portal of the service apparatus, the advertisement template code of the customized advertisement template and the parameter used by the template that are directly recorded by an advertisement slot provider.

With reference to any one of the first aspect and the first to second possible implementation manners of the first aspect, in a third possible implementation manner of the first aspect: the parameter used by the template includes an advertisement text, an image, a size, a font, a color, video duration, an advertisement click action, and a redirection address.

With reference to the first aspect, in a fourth possible implementation manner of the first aspect, the method further includes: receiving, by the server, a template identifier specified by the service apparatus, finding, by using the template identifier, an advertisement template corresponding to the template identifier, and creating an advertisement slot by using the advertisement template corresponding to the template identifier.

According to a second aspect, an embodiment of the present invention provides a server, where the server includes an acquiring module, a template generation module, a saving module, an identifier generation module, and a sending module, where the acquiring module is configured to acquire advertisement template code of a customized advertisement template and parameter used by the template from a service apparatus, where the advertisement template code provides a rule system of the advertisement template, and the parameter used by the template provide specific parameter values that need to be used in the advertisement template; the template generation module is configured to generate the customized advertisement template according to the advertisement template code and the parameter used by the template that are acquired by the acquiring module; the saving module is configured to save the customized advertisement template; the identifier generation module is configured to generate a template identifier corresponding to the customized advertisement template, where the template identifier is used to identify the customized advertisement template; and the sending module is configured to return the template identifier to the service apparatus.

With reference to the second aspect, in a first possible implementation manner of the second aspect: the server further includes a receiving module, a searching module, and an advertisement slot creation module, where the receiving module is configured to receive a template identifier specified by the service apparatus; the searching module is configured to find, by using the template identifier, an advertisement template corresponding to the template identifier; and the advertisement slot creation module is configured to create an advertisement slot according to the advertisement template corresponding to the template identifier.

According to a third aspect, an embodiment of the present invention provides a server, where the server includes a processor, a memory, an input device, and an output device, where the memory, the input device, and the output device are separately connected to the processor, where the input device acquires advertisement template code of a customized advertisement template and parameter used by the template from a service apparatus; the processor is configured to generate the customized advertisement template according to the advertisement template code and the parameter used by the template that are acquired by the input device, and generate a template identifier corresponding to the advertisement template, where the template identifier is used to identify the customized advertisement template; the memory is configured to save the customized advertisement template; and the output device is configured to return the template identifier to the service apparatus.

With reference to the third aspect, in a first possible implementation manner of the third aspect, the input device is further configured to receive a template identifier specified by the service apparatus; and the processor is further configured to find, by using the template identifier, an advertisement template corresponding to the template identifier, and create an advertisement slot by using the corresponding advertisement template.

According to a fourth aspect, an embodiment of the present invention provides an advertisement placement system, where the advertisement placement system includes a server and a service apparatus, where the service apparatus is configured to send code of an advertisement template and parameter used by the template to the server, where the code of the advertisement template provides a rule system of the advertisement template, and the parameter used by the template provide specific parameter values that need to be used in the advertisement template; and the server includes an acquiring module, a template generation module, a saving module, an identifier generation module, and a sending module, where the acquiring module is configured to acquire advertisement template code of a customized advertisement template and parameter used by the template from the service apparatus; the template generation module is configured to generate the customized advertisement template according to the advertisement template code and the parameter used by the template that are acquired by the acquiring module, where the advertisement template code provides a rule system of the advertisement template, and the parameter used by the template provide specific parameter values that need to be used in the advertisement template; the saving module is configured to save the customized advertisement template; the identifier generation module is configured to generate a template identifier corresponding to the customized advertisement template, where the template identifier is used to identify the customized advertisement template; and the sending module is configured to return the template identifier to the service apparatus.

Compared with the prior art, beneficial effects of the present invention are as follows: in the present invention, a server acquires and saves advertisement template code of an advertisement template customized by a service apparatus and parameter used by the template, generates, according to the advertisement template code and the parameter used by the template, a template identifier corresponding to the customized advertisement template, and returns the template identifier to the service apparatus. In this way, the server in the present invention can accept an advertisement template that is customized by the service apparatus according to an advertisement form, so that advertisement placement is no longer limited to a built-in advertisement template of an advertisement placement system, and the advertisement placement system can be used more flexibly and can adapt to different advertisement forms.

### BRIEF DESCRIPTION OF DRAWINGS

FIG. 1 is a schematic structural diagram of an advertisement placement system in the prior art;
FIG. 2 is a flowchart of a method for configuring an advertisement template according to an embodiment of the present invention;
FIG. 3 is a flowchart of generating, by a server, an advertisement template according to an embodiment of the present invention;
FIG. 4 is a flowchart of another method for configuring an advertisement template according to an embodiment of the present invention;
FIG. 5 is a schematic diagram of interaction in a process of an advertisement placement method according to an embodiment of the present invention;
FIG. 6 is a schematic structural diagram of a server according to an embodiment of the present invention;
FIG. 7 is a schematic structural diagram of another server according to an embodiment of the present invention;
FIG. 8 is a schematic structural diagram of a service apparatus according to an embodiment of the present invention; and
FIG. 9 is a schematic structural diagram of another server according to an embodiment of the present invention.

### DESCRIPTION OF EMBODIMENTS

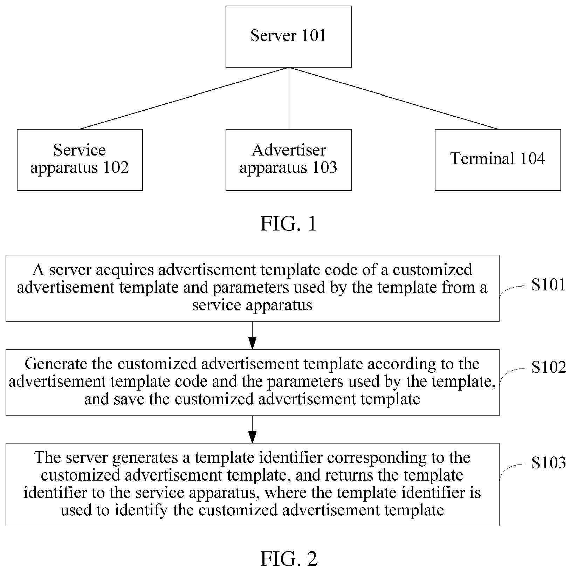

To facilitate understanding of the present invention, an embodiment of the present invention briefly describes a structure of an advertisement placement system first. Referring to FIG. 1, FIG. 1 is a schematic structural diagram of an advertisement placement system in the prior art, where the advertisement placement system includes a server 101 and a service apparatus 102, and may further include an advertiser apparatus 103 and a terminal 104.

The server 101 is responsible for providing an advertisement service, including management of an advertisement template, parameter, an advertisement material, and the like.

The service apparatus 102 is responsible for creating an advertisement slot for the server 101, so that the server 101 may provide the advertisement slot to an advertiser.

The advertiser queries the server 101, by using the advertiser apparatus 103, for an available advertisement slot and one or more advertisement template identifiers supported by the corresponding advertisement slot, so that the advertiser may select an advertisement slot, a placement schedule, a placement condition, advertisement audience, and the like, create an advertisement task, upload an advertisement material, and the like.

An application of the terminal 104 requests an advertisement from the server 101 by using a software client, such as an advertisement SDK, of the terminal.

In view of this, embodiments of the present invention provide a method for configuring an advertisement template, a server, a service apparatus, and a system, aiming at enabling an advertisement type and a presentation form to be not limited to a built-in advertisement template of the system, so that advertisement placement becomes more flexible and diversified.

The following describes the embodiments of the present invention in detail, but is not intended to limit the scope of the present invention.

Referring to FIG. 2, FIG. 2 is a flowchart of a method for configuring an advertisement template according to an embodiment of the present invention. This embodiment uses an example in which a server implements the method for configuring an advertisement template for description, and the method for configuring an advertisement template in this embodiment includes the following steps:
S101: A server acquires advertisement template code of a customized advertisement template and parameter used by the template from a service apparatus.

The service apparatus may customize an advertisement template for a to-be-created advertisement slot as required, and provide advertisement template code of the customized advertisement template, parameter used by the template, and the like to the server. The advertisement template code provides a rule system of the advertisement template, and the parameter used by the template provide specific parameter values that need to be used in the advertisement template. The advertisement template code is a source file of advertisement placement code, and parameter of the advertisement template code are all represented by using parameter identifiers, and a piece of advertisement placement code can be generated by replacing the parameter identifiers with the specific parameter values that need to be used in the advertisement template. The parameter used by the template may include, but is not limited to: an advertisement text, an image, a size, a font, a color, video duration, an advertisement click action, and a redirection address. The server acquires the advertisement template code and the parameter used by the template that are provided by the service apparatus.

The server may further acquire advertisement preview code and a material page script from the service apparatus.

In this embodiment, the server may acquire the advertisement template code of the customized advertisement template and the parameter used by the template from the service apparatus in the following two manners:
the server receives a template file from the service apparatus, and parses the template file to obtain the advertisement template code of the customized advertisement template and the parameter used by the template, where
a form of the template file may be any one of an Extensible Markup Language (Extensible Markup Language, xml) form, a text file (txt) form, and a json file form; or
the server may acquire, from an operation portal of the service apparatus, the advertisement template code of the customized advertisement template and the parameter used by the template that are directly recorded by an advertisement slot provider, and save the advertisement template code and the parameter used by the template.

S102: Generate the customized advertisement template according to the advertisement template code and the parameter used by the template, and save the customized advertisement template.

After the server acquires the advertisement template code and the parameter used by the template, the server generates, according to the advertisement template code of the new customized advertisement template and the parameter used by the template, the customized advertisement template, and saves the customized advertisement template. In this way, the advertisement template customized by the service apparatus for the advertisement slot can also be directly used as a template as a built-in advertisement template of a system.

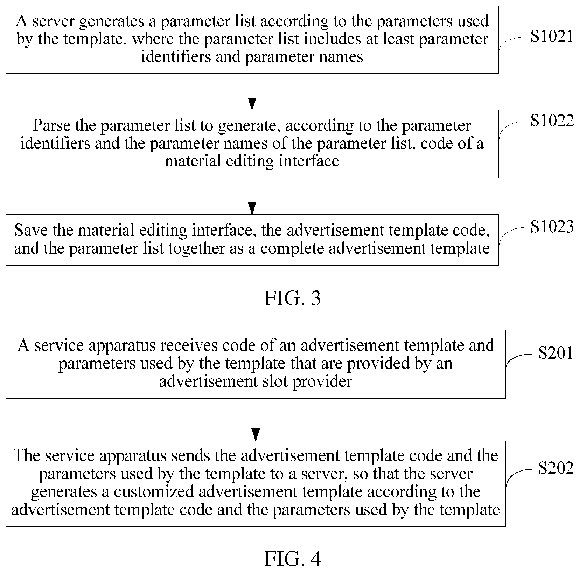

Further, referring to FIG. 3, the generating, by the server, the advertisement template specifically includes the following steps:
S1021: The server generates a parameter list according to the parameters used by the template, where the parameter list includes at least parameter identifiers and parameter names.
S1022: Parse the parameter list to generate, according to the parameter identifiers and the parameter names of the parameter list, code of a material editing interface.

The generating code of a material editing interface is specifically encapsulating the parameter list into a form, and the form is a part of the code of the material editing interface and is used to carry the parameters used by the template. Each template parameter in the parameter list is used as an input control in the form, where an input control is a standard HTML page element such as a text input box, a file upload button, or a page display item, and a parameter used by a template may correspond to one or more input controls.

S1023: Save the material editing interface, the advertisement template code, and the parameter list together as a complete advertisement template.

The parameter list may further include a template name, a parameter type, a parameter check rule (including a text length limit, a file size limit, a text format, check prompt information, and the like), and a parameter default value. When the material editing interface is generated, a JS check script is generated according to the parameter check rule, and when the form is submitted, a parameter whose value is not provided is submitted by using a default value of the parameter.

For a text type parameter, an input box is correspondingly generated in the code of the material editing interface.

For an image type parameter, a file upload control, an image control used to display an uploaded image, and a hidden control used for parameter submission are correspondingly generated in the code of the material editing interface.

For a file type parameter, a file upload control is correspondingly generated in the code of the material editing interface.

For example, the following is code of a material editing interface finally generated according to parameters used by a template:

```
           <form onsubmit="return false;" name="privateForm" id="privateForm">
           where note: the following is a form of the parameters used by the template:
               <div style="" class="tupian" id="privateHtmlDiv">
                <div class="new_sucai0007">
                     <p class="wenzi07">name:</p>
                     <p class="srk07">
                         <input type="text" name="NAME"
                         validate="{requiredarue,messages:
 {required:'please enter a material name,!'}}" id="NAME">
                     </p>
                </div>
```

where the foregoing is a result finally generated by using the text type parameters, and this part is a material name part in the parameters of the template and is generated by using name parameters in the parameter list, and correspondingly, on the page, this part is a text input box that has a check function and that follows a text description "name";

```
                <div class="new_sucai0003">
                     <p class="wenzi03">image:</p>
                     <p class="srk03">
                         <input type="text" readonly="" style="vertical-align:middle;"
                         validate="{requiredarue,messages:
{required:'please upload an advertisement image!'}}" class="zxl"
                         id="IMAGE_URL_file">
                         <input type="hidden" value="" name="IMAGE_URL"
                         id="IMAGE_URL">
                         <a href="javaScript:void(0);" class="closein"
                         id="IMAGE_URL_upload">upload an image</a>
                     </p>
                </div>
                <div class="new_sucai0004">
                     <p class="srk04">a size of the image cannot exceed 10 M </p>
                </div>
```

where the foregoing is a result finally generated by using the image type parameters in the parameter list, and this part is an image part in the parameters of the template and is generated by using image parameters in the parameter list, and correspondingly, on the page, this part includes a text description "Image", a read-only text box used to display an image link address, a hidden variable IMAGE_URL used to save an image address, a file upload control, and a paragraph of text description of an image limit;

```
                <div style="display:none;margin-bottom: 10px; width: 400px; height: 300px;
                padding-left: 100px;" id="filePreview">
                </div>
           where this part is to generate an area used to preview the uploaded image in a result;
                <div class="new_sucai0007">
                     <p class="wenzi07">link:</p>
                     <p class="srk07">
                         <input type="text" name="CLICK_URL"
                         validate="{required:true,url:true,messages:
{required:'please enter an advertisement click link
                         address',url:'a format of a link URL address is incorrect',
url:'the format of the link URL address is
                         incorrect!'}}" id="CLICK_URL">
                     </p>
                </div>
```

where this part is a final result generated by using link parameters in the parameter list, and correspondingly, on the page, this part is a text input box that has a check function and that follows a text description "link";

```
            </div>
               <div id="defaultDiv" style="display: block;">
                    <div class="new_sucai0007">
                         <p class="wenzi07"><span class="redd">*</span>material size:</p>
                         <p class="srk07">
                         <input type="hidden" value="" name="WIDTH" id="WIDTH">
                         <input type="hidden" value="" name="HEIGHT" id="HEIGHT">
                         <input type="text" validate=
"{required:true,regular:'^[1-9]\\d{0,4}\\*[1-
                         9]\\d{0,4{$',messages:
{required:'size is mandatory',
regular:'a size format is incorrect'}}" value=""
                         name="adSize" id="adSize">
                         <span style="color:#666;"> for example:100*100</span>
                         </p>
                    </div>
```

where this part is a result generated according to a material width part and a material height part in the parameter list, and correspondingly, on the page, this part includes a text description "material size", a hidden variable WIDTH used to save a material width value, a hidden variable HEIGHT used to save a material height, a text input box that has a format check function and that is used to input a width*a height, and a paragraph of text description of a format limit;

```
                    <div style="padding-left:128px;" class="password_button">
                         <input type="button" onclick="formSubmit(this);" value="save"
                         class="save">     
                         <input type="button" style="" value="preview" class="kong"
                         id="previewOper">     
                         <input type="button" value="return" onclick="back()" class="kong">
                    </div>
```

where this part is a material preview function and an editing page exit function provided by the form; and

```
               </div>
           </form>
```

When content provided to the server further includes the advertisement preview code and the material page script, each of the advertisement template code, the preview code, and the material page script is a paragraph of HTML script code, including the parameter identifiers of the template; and code of a complete material editing interface that is obtained by combining the material page script and the code of the material editing interface that is generated by the server, and the foregoing parameter list together form a complete advertisement template.

S103: The server generates a template identifier corresponding to the customized advertisement template, and returns the template identifier to the service apparatus, where the template identifier is used to identify the customized advertisement template.

In addition, after the customized advertisement template is saved, the server may further generate the template identifier corresponding to the customized advertisement template and return the template identifier to the service apparatus. The template identifier is used to identify the customized advertisement template, so that during subsequent advertisement placement, when an advertiser specifies an advertisement template for an advertisement slot, the advertiser directly uses a template identifier to notify the server, so that the server may find the corresponding advertisement template according to the template identifier.

It should be noted that the server mentioned in this embodiment of the present invention is an advertisement server supporting template customizing and modification functions. Certainly, besides an existing advertisement server, a template server supporting template customizing and modification functions may be further added, and the template server provides an advertisement service together with the advertisement server. The service apparatus mentioned in this embodiment of the present invention is used in conjunction with the server in implementation and specifically implements a function of an advertisement slot provider.

Through descriptions of the foregoing embodiment, it may be understood that in the present invention, a server acquires advertisement template code of an advertisement template customized by a service apparatus and parameters used by the template, generates the customized advertisement template according to the advertisement template code and the parameters used by the template, and saves the customized advertisement template. In this way, the server in the present invention can newly add an advertisement template, so that an advertisement type and a presentation form are not limited to a built-in advertisement template of a system, and therefore, an advertisement placement system can be used more flexibly and can adapt to different advertisement forms.

Referring to FIG. 4, FIG. 4 is a flowchart of another method for configuring an advertisement template according to an embodiment of the present invention. This embodiment uses an example in which a service apparatus implements the method for configuring an advertisement template for description, and the method for configuring an advertisement template in this embodiment includes the following steps:
S201: A service apparatus receives code of an advertisement template and parameters used by the template that are provided by an advertisement slot provider.

The advertisement slot provider may customize an advertisement template for a to-be-created advertisement slot as required, and provide advertisement template code and parameters used by the template to the service apparatus. The advertisement template code provides a rule system of the advertisement template, and the parameters used by the template provide specific parameter values that need to be used in the advertisement template. The advertisement template code is a source file of advertisement placement code, and parameters of the advertisement template code are all represented by using parameter identifiers, and a piece of advertisement placement code can be generated by replacing the parameter identifiers with the specific parameter values that need to be used in the advertisement template. The service apparatus receives the advertisement template code and the parameters used by the template that are provided by the advertisement slot provider.

The parameters used by the template may include, but is not limited to: an advertisement text, an image, a size, a font, a color, video duration, an advertisement click action, and a redirection address.

S202: The service apparatus sends the advertisement template code and the parameters used by the template to a server, so that the server generates a customized advertisement template according to the advertisement template code and the parameters used by the template.

Besides the advertisement template code of the customized advertisement template and the parameters used by the template that are sent to the server, advertisement preview code and a material page script may be further sent.

In this embodiment, two possible implementation manners of the sending, by the service apparatus, the advertisement template code of the customized advertisement template and the parameters used by the template to a server are provided:

In a first fist possible implementation manner, the service apparatus sends the advertisement template code and the parameters used by the template in a form of a template file to the server, so that the server obtains the advertisement template code and the parameters used by the template by parsing the template file.

A form of the template file may be any one of an Extensible Markup Language (Extensible Markup Language, xml) form, a text file (txt) form, and a json file form.

For example, the customized advertisement template may be defined as a file of an xml format, and the following provides an example of an advertisement template file of an xml format, and content in the example is merely exemplary and may be modified adaptively as required in an actual application:

```
           <?xml version = "1.0" encoding = "utf-8" ?>
           <adTemplate name="my template">
```

where the foregoing is used to define a name of a to-be-created advertisement template;
when a template is specifically created, "my template" is replaced with a corresponding defined template name;

```
            <!-- Param used for page display-->
            <params>
                  <param parameterId="NAME" name="name" type="text"
                  validate="{required:true,messages:{required:
'please enter a material name!'}}" default="" ></param>
                  <param parameterId="IMAGE_URL" name="image"
                  type="img(jpg|swf|jpeg|png|gif)" validate="
{required:true,messages:{required:'please upload an
                  advertisement image,!'}}" default="" ></param>
                  <param parameterId="CLICK_URL" name="link" type="text"
                  validate="{required:true,url:true,messages:
{required:'please enter an advertisement click link
                  address',url:'a format of a link URL address is incorrect!'}}
" default="" ></param>
                  <param parameterId="WIDTH" name="material width" type="text"
                  validate="{max:200,min:100,messages:
'a material width is limited between 100 to 200!'}"
                  default="" ></param>
                  <param parameterId="HEIGHT" name="material height" type="text"
                  validate="{max:200,min:100,messages:
'a material height is limited between 100 to 200!'}"
                  default="" ></param>
            </params>
```

where the foregoing provides different template parameter identifiers and template parameter names, where "param parameterId" indicates a template parameter identifier, such as the foregoing "NAME", "IMAGE_URL", "CLICK_URL", and the like; and "param name" indicates a template parameter name, such as the foregoing "image", "link", "material width", and the like;

```
            <templateCode>
               <![CDATA[
               var htmlstr = "<dd><a
               href='${svp.addSig("${svp.reServer}/track?d=$$
{CLICK_URL}&t=${svp.t}&a=${svp.adcallDP}
               &op=imp")}' target='_blank'><img src='$${IMAGE_URL}'
 width='64' height='64'/>
               </a></dd><dt>$${NAME}</dt>";
              <#if svp.codeType="scripttype">
              document. write(htmlstr);/*%(HIAD.ad_call_frequency=${svp.getSlotAttr
("frequency")})%*/
                  <#elseif svp.codeType="divtype">
                     (function(_win){
                          var divDom = document.getElementById("${svp.divid}");
                          divDom.innerHTML =
                          htmlstr;/*%(HIAD.ad_call_frequency=${svp.getSlotAttr("frequency")})%*/
                     })(window)
                  </#if>
               ]]>
            </templateCode>
```

where the foregoing "templateCode" indicates advertisement template code, and corresponding advertisement template code follows "templateCode";

```
           <!-- used for page data processing and new and modification preview-->
           <uiInputParser>
               <![CDATA[
                 $("#previewOper").click(function(){
                     /*check parameter before preview*/
                     var flag = true;
                     $.metadata.setType("attr", "validate");
                     flag = jQuery(this).parents("form").validate().form();
                     if(flag) {
                         /*preview Html code*/
                         var previewContent ;
                         previewContent = "<dd><a href='$${CLICK_URL}'
                         target='_blank'><img src='$${IMAGE_URL}' width='64'
                         height='64'/></a></dd><dt>$${name}</dt>";
                         /*parameter values*/
                         var name = $("#NAME").attr('value');
                         var adSize = $("#adSize").attr('value').split("*");
                         var width = adSize[0];
                         var height = adSize[1];
                         var clickURL = $("#CLICK_URL").attr('value');
                         var fileUrl = $("#IMAGE_URL").attr('value');
                         /*parameter replacements*/
                         previewContent = previewContent.replace(/\$\$\{ WIDTH\}/g, width);
                         previewContent = previewContent.replace(/\$\$\{HEIGHT\}/g, height);
                         previewContent = previewContent.replace(/\$\$\{name}/g, name);
                         previewContent = previewContent.replace(/\$\$\{CLICK_URL}/g,
                         clickURL);
                         previewContent = previewContent.replace(/\$\$\{IMAGE_URL}/g,
                         fileUrl);
                         /*pop-up*/
                         var options = {
                             title: "preview",
                             width: width,
                             height: height,
                             content: "<div style='border:thin solid #c7ccd9;width:" + width +
                             "px;height:" + height + "px;'>" + previewContent + "</div>",
                             lock: true
                         };
                         $.dialog(options);
                     }
                 });
               ]]>
            </uiInputParser>
```

where the foregoing "uiInputParser" indicates a script corresponding to a material editing interface of an advertiser, and the script corresponding to a corresponding advertisement placement material editing interface follows "uiInputParser", which may be bound with an editing interface control event, and the like.

```
           <!-- View code used for page display-->
            <uiPreviewCode>
               <![CDATA[<dd><a href="$${CLICK_URL}" target="_blank"><img
               src="$${IMAGE_URL}" width="64" height="64"/></a></dd><dt>$${NAME}</dt>]]>
            </uiPreviewCode>
           </adTemplate>
```

where the foregoing "uiPreviewCode" indicates advertisement preview code, and code used for advertisement preview follows "uiPreviewCode".

When the form of the template file is an xml form, the template file in the xml form includes at least three template elements: a template parameter identifier, a parameter name, and advertisement template code.

Certainly, the template file of the xml form may further include at least one of the following template elements: an advertisement template, a control type of a template parameter on an operation portal of an advertiser, a template parameter value check rule, a template parameter default value, advertisement preview code, and a script corresponding to a material editing interface of the advertiser.

The following provides and briefly describes template elements of the foregoing template file of the xml form by using a form, and refer to the following Table 1:

**Table 1: Template elements in a template file in an xml form**

| **Template Element** | **Description** |
|---|---|
| name | Advertisement template name |
| param parameterId | Template parameter identifier |
| param name | Template parameter name |
| param type | Control type of a template parameter on an advertiser portal |
| param validate | Template parameter value check rule, which may include a check failure prompt, and the like |
| param default | Template parameter default value |
| templateCode | Advertisement template code, which may include a template parameter variable. An advertisement server may generate final advertisement placement code by combining the template code and parameter values provided by an advertiser. |
| uiPreviewCode | Advertisement preview code |
| uiInputParser | Script corresponding to a material editing interface of an advertiser, which may be bound with an editing page control event, and the like |

An advertisement preview function may be provided by using the advertisement preview code, that is, advertisement preview code may be generated by combining the advertisement preview code and parameter values provided by the service apparatus, so as to preview a final advertisement placement effect in advance.

The forgoing template elements may be modified with reference to actual use.

In a second possible implementation manner, the service apparatus may directly send, to the server, the advertisement template code and the parameters used by the template that are directly recorded by an advertiser provider from a Portal of the service apparatus.

For specific implementation of the generating, by the server, an advertisement template according to the parameters used by the advertisement template and the advertisement template code, refer to the detailed description of the foregoing embodiment, and details are not described herein again.

After the service apparatus sends the advertisement template code and the parameters used by the template to the server, the service apparatus further receives a template identifier that is generated by the server for the customized advertisement template, where the template identifier is used to identify the customized advertisement template.

After the server generates the customized advertisement template according to the advertisement template code and the parameters used by the template that are provided by the service apparatus and saves the customized advertisement template, the server further generates the template identifier corresponding to the customized advertisement template, and returns the template identifier to the service apparatus.

The service apparatus receives the template identifier corresponding to the customized advertisement template and returned by the server, so that during subsequent advertisement placement, when an advertiser specifies an advertisement template for an advertisement slot, the advertiser directly uses a template identifier to notify the server, so that the server may find the corresponding advertisement template according to the template identifier. In this way, a customized advertisement template may be generated according to advertisement template code and parameters used by the template that are provided by an advertisement slot provider, so that the same as a built-in advertisement template of a system, the customized advertisement template can be directly used as an advertisement template; therefore, advertisement placement is no longer limited to the built-in advertisement template of the system by implementing a function of newly adding an advertisement template, and an advertisement placement form is more flexible and diversified.

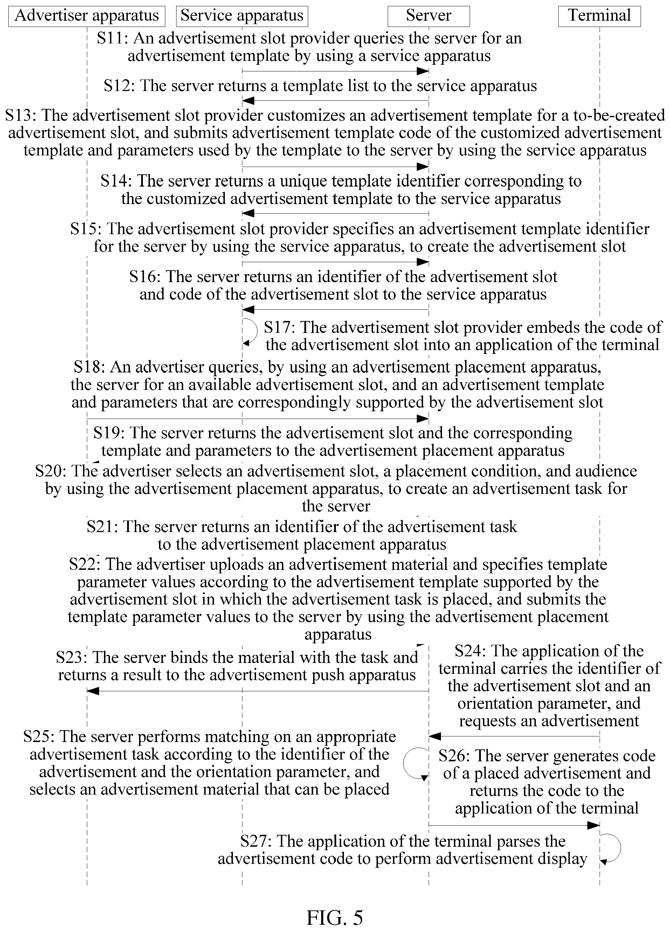

An embodiment of the present invention further provides an application instance of a method for configuring an advertisement template of the present invention in an advertisement placement method. Referring to FIG. 5, FIG. 5 is a schematic diagram of interaction in a process of an advertisement placement method according to an embodiment of the present invention, where the advertisement placement method in this embodiment includes:
S11: An advertisement slot provider queries a server for an advertisement template by using a service apparatus.

The advertisement slot provider queries the server for the advertisement template by using the service apparatus.

S12: The server returns a template list to the service apparatus.

In response to a query request from the service apparatus, the server returns an available advertisement template list of a system to the service apparatus.

S13: The advertisement slot provider customizes an advertisement template for a to-be-created advertisement slot, and submits advertisement template code of the customized advertisement template and parameters used by the template to the server by using the service apparatus.

The advertisement slot provider provides the advertisement template code and the parameters used by the template for the service apparatus, customizes the advertisement template for the to-be-created advertisement slot, and submits the advertisement template code of the customized advertisement template, the parameters used by the template, and the like to the server, and the server generates the customized advertisement template according to the advertisement template code and the parameters used by the template, and saves the customized advertisement template.

S14: The server returns a template identifier corresponding to the customized advertisement template to the service apparatus.

The server generates the template identifier for the customized advertisement template and returns the template identifier to the service apparatus, where the template identifier is used to identify the customized advertisement template, so that during subsequent advertisement placement, an advertisement template corresponding to the template identifier can be used for advertisement placement by providing a template identifier to the server.

S 15: The advertisement slot provider specifies an advertisement template identifier for the server by using the service apparatus, to create the advertisement slot.

The advertisement slot provider specifies one or more advertisement template identifiers supported by the advertisement slot and advertisement slot information (for example, a name, a size, and the like of the advertisement slot name) for the server by using the service apparatus, to request to create the advertisement slot.

S16: The server returns an identifier of the advertisement slot and code of the advertisement slot to the service apparatus.

After the server creates the advertisement slot according to the template identifier, the server returns the identifier of the advertisement slot and the corresponding code of the advertisement slot to the service apparatus.

S 17: The advertisement slot provider embeds the code of the advertisement slot into an application of a terminal.

The advertisement slot provider embeds the code of the advertisement slot into the application of the terminal.

S18: An advertiser queries, by using an advertisement placement apparatus, the server for an available advertisement slot, and an advertisement template and parameters that are correspondingly supported by the advertisement slot.

The advertiser queries, by using an advertiser apparatus, the server for the available advertisement slot, and the advertisement template and the parameters that are supported by the corresponding advertisement slot, where the parameters include, but are not limited to: an advertisement text, an image, a size, a font, a color, video duration, an advertisement click action, a redirection address, and the like.

S19: The server returns the advertisement slot and the corresponding template and parameters to the advertisement placement apparatus.

The server returns the advertisement slot that is available for placement and the corresponding advertisement template and parameters to the advertisement placement apparatus.

S20: The advertiser selects an advertisement slot, a placement condition, and audience by using the advertisement placement apparatus, to create an advertisement task for the server.

The advertiser selects the advertisement slot, the placement condition, and the audience, to create the advertisement task for the server.

S21: The server returns an identifier of the advertisement task to the advertisement placement apparatus.

After creating the advertisement task for the advertiser, the server returns the identifier of the advertisement task to the advertisement placement apparatus.

S22: The advertiser uploads an advertisement material and specifies template parameter values according to the advertisement template supported by the advertisement slot in which the advertisement task is placed, and submits the template parameter values to the server by using the advertisement placement apparatus.

An advertiser Portal selects a template for each material, loads uiInputTemplate static code corresponding to the template, and executes corresponding js code uiInputParser, to dynamically generate an advertisement material editing interface. The advertiser specifies parameter values on the interface and submits the parameter values to the server.

When an advertisement material is modified, besides the foregoing dynamically generated advertisement material editing interface, the parameter values also need to be backfilled in controls on the interface.

S23: The server binds the material with the task and returns a result to the advertisement placement apparatus.

The server replaces the submitted template parameter values in corresponding template code to generate advertisement code of each material, saves the advertisement task, and binds the advertisement materials with the task.

S24: The application of the terminal carries the identifier of the advertisement slot and an orientation parameter, and requests an advertisement from the server.

The application of the terminal may request the advertisement from the server by using an advertisement SDK.

S25: The server performs matching on an appropriate advertisement task according to the identifier of the advertisement slot and the orientation parameter, and selects an advertisement material that can be placed.

The server performs matching on the appropriate advertisement task according to the requested identifier of the advertisement slot and the orientation parameter, and selects the advertisement material that can be placed.

S26: The server generates code of a placed advertisement and returns the code to the application of the terminal.

S27: The application of the terminal parses the advertisement code to perform advertisement display.

The application of the terminal may parse the advertisement code by using the advertisement SDK, to display returned advertisement content.

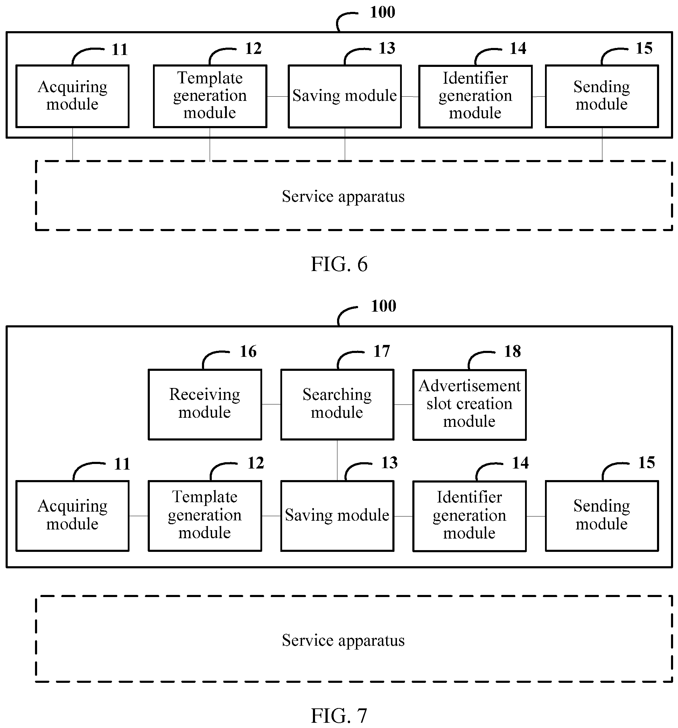

Referring to FIG. 6, FIG. 6 is a schematic structural diagram of a first server according to an embodiment of the present invention. In this embodiment, the server 100 includes an acquiring module 11, a template generation module 12, a saving module 13, an identifier generating template 14, and a sending module 15.

The acquiring module 11 is configured to acquire advertisement template code of a customized advertisement template and parameters used by the template from a service apparatus, where the advertisement template code provides a rule system of the advertisement template, and the parameters used by the template provide specific parameter values that need to be used in the advertisement template.

The service apparatus may customize an advertisement template for a to-be-created advertisement slot as required, and provide advertisement template code of the customized advertisement template, parameters used by the template, and the like to the server. The advertisement template code provides a rule system of the advertisement template, and the parameters used by the template provide specific parameter values that need to be used in the advertisement template. The advertisement template code is a source file of the advertisement template, and parameters of the advertisement template code are in a form of replacement characters, and an advertisement template can be generated by replacing the replacement characters thereof with the specific parameter values that need to be used in the advertisement template. The parameters used by the template may include, but is not limited to: an advertisement text, an image, a size, a font, a color, video duration, an advertisement click action, and a redirection address. The server acquires, by using the acquiring module 11, the advertisement template code and the parameters used by the template that are provided by the service apparatus.

The server may further acquire advertisement preview code and a material page script from the service apparatus.

In this embodiment, the acquiring module 11 may acquire the advertisement template code of the customized advertisement template and the parameters used by the template from the service apparatus in the following two manners:
the acquiring module 11 may receive a template file from the service apparatus, and parse the template file to obtain the advertisement template code of the customized advertisement template and the parameters used by the template, where
a form of the template file may be any one of an Extensible Markup Language (Extensible Markup Language, xml) form, a text file (txt) form, and a json file form; or
the acquiring module 11 may acquire, from an operation portal of the service apparatus, the advertisement template code of the customized advertisement template and the parameters used by the template that are directly recorded by an advertisement slot provider, and save the advertisement template code and the parameters used by the template.

The template generation module 12 is configured to generate the customized advertisement template according to the advertisement template code and the parameters used by the template that are acquired by the acquiring module 11.

After the server acquires the advertisement template code and the parameters used by the template, the template generation module 12 generates, according to the advertisement template code of the new customized advertisement template and the parameters used by the template, the new customized advertisement template. In this way, the advertisement template customized by an advertisement provider for the advertisement slot can also be directly used as a template as a built-in advertisement template of a system.

The template generation module 12 may specifically generate the advertisement template by performing the following steps: 1: generating a parameter list according to the parameters used by the template, where the parameter list includes at least parameter identifiers and parameter names; 2: parsing the parameter list to generate a material editing interface, where the generating a material editing interface is specifically encapsulating the parameter list into a form, and each parameter of the template is used as an input control in the form, where the parameter identifier is used as a control identifier, and the parameter name is used as a page display name; and 3: saving the material editing interface, the advertisement template code, and the parameter list together as a complete advertisement template.

The parameter list may further include a template name, a parameter type, a parameter check rule (including a text length limit, a file size limit, a text format, check prompt information, and the like), and a parameter default value. When the material editing interface is generated, a JS check script is generated according to the parameter check rule, and when the form is submitted, a parameter whose value is not provided is submitted by using a default value of the parameter.

For a text type parameter, an input box is correspondingly generated in code of the material editing interface.

For an image type parameter, a file upload control, an image control used to display an uploaded image, and a hidden control used for parameter submission are correspondingly generated in the code of the material editing interface.

For a file type parameter, a file upload control is correspondingly generated in the code of the material editing interface.

When content provided to the server further includes the advertisement preview code and the material page script, each of the advertisement template code, the preview code, and the material page script is a paragraph of HTML script code, including the parameter identifiers of the template; and code of a complete material editing interface that is obtained by combining the material page script and the code of the material editing interface that is generated by the server, and the foregoing parameter list together form a complete advertisement template.

The saving module 13 is configured to save the customized advertisement template.

The identifier generation module 14 is configured to generate a template identifier corresponding to the customized advertisement template, where the template identifier is used to identify the customized advertisement template.

In addition, after the customized advertisement template is saved, the identifier generation module 14 may further generate the template identifier corresponding to the customized advertisement template. The template identifier is used to identify the customized advertisement template, so that during subsequent advertisement placement, when an advertiser specifies an advertisement template for an advertisement slot, the advertiser directly uses a template identifier to notify the server, so that the server may find the corresponding advertisement template according to the template identifier.

The sending module 15 is configured to return the template identifier to the service apparatus.

The server further includes the sending module 15, where the sending module 15 is configured to return the template identifier to the service apparatus.

Further, referring to FIG. 7, FIG. 7 is a schematic structural diagram of another server according to an embodiment of the present invention. In this embodiment, besides including the acquiring module 11, the template generation module 12, the saving module 13, the identifier generation module 14, and the sending module 15, the server further includes a receiving module 16, a searching module 17, and an advertisement slot creation module 18.

The receiving module 16 is configured to receive a template identifier specified by the service apparatus.

When the service apparatus needs to create an advertisement slot, the service apparatus specifies one or more advertisement template identifiers supported by the advertisement slot and information about the advertisement slot for the server.

The searching module 17 is configured to find, by using the template identifier, an advertisement template corresponding to the template identifier.

After receiving the advertisement template identifier specified by the service apparatus, the server finds, by using the template identifier, the advertisement template corresponding to the template identifier.

The advertisement slot creation module 18 is configured to create an advertisement slot according to the advertisement template corresponding to the template identifier.

The server uses the found advertisement template corresponding to the template identifier to create the advertisement slot.

It should be noted that the server mentioned in this embodiment of the present invention is an advertisement server supporting template customizing and modification functions. Certainly, besides an existing advertisement server, a template server supporting template customizing and modification functions may be further added, and the template server provides an advertisement service together with the advertisement server. The service apparatus mentioned in this embodiment of the present invention is used in conjunction with the server in implementation and specifically implements a function of an advertisement slot provider.

The server in this embodiment can implement steps in the method in the embodiment shown in FIG. 2 of the present invention, and in this embodiment, division of modules is merely an example, and on the basis of achieving an objective of the present invention, division of the modules in the server may be implemented in another manner, for example, may be implemented by integrating several modules into one module.

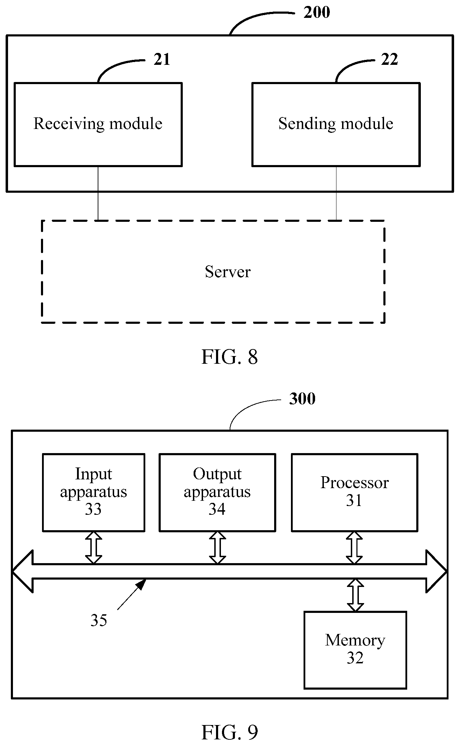

Referring to FIG. 8, FIG. 8 is a schematic structural diagram of a first service apparatus according to an embodiment of the present invention. In this embodiment, the service apparatus 200 includes a receiving module 21 and a sending module 22.

The receiving module 21 is configured to receive code of an advertisement template and parameters used by the template that are provided by an advertisement slot provider.

The advertisement slot provider may customize an advertisement template for a to-be-created advertisement slot as required, and provide advertisement template code and parameters used by the template to the service apparatus. The service apparatus receives, by using the receiving module 21, the advertisement template code and the parameters used by the template that are provided by the advertisement slot provider.

The parameters used by the template may include, but is not limited to: an advertisement text, an image, a size, a font, a color, video duration, an advertisement click action, and a redirection address.

The sending module 22 is configured to send the advertisement template code and the parameters used by the template to a server, so that the server generates a customized advertisement template according to the advertisement template code and the parameters used by the template.

Besides the advertisement template code of the customized advertisement template and the parameters used by the template that are sent to the server, advertisement preview code and a material page script may be further sent.

In this embodiment, the sending module 21 sends the advertisement template code and the parameters used by the template to the server in either of the following manners:

The sending module 21 sends the advertisement template code and the parameters used by the template in a form of a template file to the server, so that the server parses the customized advertisement template to obtain the advertisement template code and the parameters used by the template.

A form of the template file may be any one of an Extensible Markup Language (Extensible Markup Language, xml) form, a text file (txt) form, and a json file form.

When the form of the template file is an xml form, the template file in the xml form includes at least three template elements: a template parameter identifier, a parameter name, and advertisement template code.

Certainly, the template file of the xml form may further include at least one of the following template elements: an advertisement template name, a template parameter name, a control type of a template parameter on an operation portal of an advertiser, a template parameter value check rule, a template parameter default value, advertisement preview code, and a script corresponding to a material editing interface of the advertiser.

Alternatively, the sending module 22 directly sends, to the server, the advertisement template code and the parameters used by the template that are directly recorded by an advertisement provider from a Portal of the service apparatus, so as to provide the advertisement template code of the customized advertisement template and the parameters used by the template to the server.

After the server generates the customized advertisement template and saves the customized advertisement template, the server further generates a template identifier corresponding to the customized advertisement template and returns the template identifier to the service apparatus, and the service apparatus further receives, by using the receiving module 21, the template identifier returned by the server, so that during subsequent advertisement placement, when an advertiser specifies an advertisement template for an advertisement slot, the advertiser directly uses a template identifier to notify the server, so that the server may find the corresponding advertisement template according to the template identifier.

In this way, a customized advertisement template may be generated according to advertisement template code and parameters used by the template that are provided by an advertisement slot provider, so that the same as a built-in advertisement template of a system, the customized advertisement template can be directly used as an advertisement template; therefore, advertisement placement is no longer limited to the built-in advertisement template of the system by implementing a function of newly adding an advertisement template, and an advertisement placement form is more flexible and diversified.

The service apparatus in this embodiment can implement steps in the method in the embodiment shown in FIG. 4 of the present invention, and in this embodiment, division of modules is merely an example, and on the basis of achieving an objective of the present invention, division of the modules in the service apparatus may be implemented in another manner, for example, may be implemented by integrating several modules into one module.

Referring to FIG. 9, FIG. 9 is a schematic structural diagram of a second server according to an embodiment of the present invention. In this embodiment, the server 300 includes a processor 31, a memory 32, an input device 33, an output device 34, and a bus system 35.

The processor 31 controls an operation of the server 300, and the processor 31 may also be referred to as a CPU (Central Processing Unit, central processing unit). The processor 31 may be an integrated circuit chip, and has a signal processing capability. The processor 31 may also be a general purpose processor, a digital signal processor (DSP, Digital Signal Processing), an application-specific integrated circuit (ASIC, Application Specific Integrated Circuit), a field programmable gate array (FPGA, Field-Programmable Gate Array), another programmable logic device, a discrete gate, a transistor logic device, or a discrete hardware component. The general purpose processor may be a microprocessor or the processor may be any conventional processor and the like.

The memory 32 may include a read-only memory and a random access memory and provide instructions and data to the processor 31. A part of the memory 32 may further include a nonvolatile random access memory (NVRAM).

Components of the server 300 are coupled together by using the bus system 35, where besides including a data bus, the bus system 35 further includes a power bus, a control bus, and a state signal bus. The bus system may be an ISA (Industry Standard Architecture, industry standard architecture) bus, a PCI (Peripheral Component Interconnect, peripheral component interconnect) bus, an EISA (Extended Industry Standard Architecture, extended industry standard architecture) bus, or the like. The bus may be one or more physical lines, and when the bus is multiple physical lines, the bus may be classified into an address bus, a data bus, a control bus, and the like. In some other embodiments of the present invention, the processor 31, the memory 32, the input device 33, and the output device 34 may also be directly connected by using a communications line. However, for clear description, various buses in the figure are denoted as the bus system 35.

The memory 32 stores the following elements, executable modules or data structures, or a subset thereof, or an extension set thereof:
operation instructions: including various operation instructions, used to implement various operations; and
an operating system: including various system programs, configured to implement various fundamental services and process a hardware-based task.

In this embodiment of the present invention, the processor 31 performs the following operations by invoking an operation instruction (the operation instruction may be stored in an operating system) stored in the memory 32:

The input device 33 acquires advertisement template code of a customized advertisement template and parameters used by the template from a service apparatus, where the advertisement template code provides a rule system of the advertisement template, and the parameters used by the template provide specific parameter values that need to be used in the advertisement template. The advertisement template code is a source file of advertisement placement code, and parameters of the advertisement template code are all represented by using parameter identifiers, and a piece of advertisement placement code can be generated by replacing the parameter identifiers with the specific parameter values that need to be used in the advertisement template.

The parameters used by the template may include, but is not limited to: an advertisement text, an image, a size, a font, a color, video duration, an advertisement click action, a redirection address, and the like.

The input device 33 may further acquire advertisement preview code and a material page script from the service apparatus.

The input device 33 may acquire the advertisement template code and the parameters used by the template from the service apparatus in the following two manners:
the input device 33 may receive a template file from the service apparatus, and parse the template file to obtain the advertisement template code of the customized advertisement template and the parameters used by the template, where
a form of the template file may be any one of an Extensible Markup Language (Extensible Markup Language, xml) form, a text file (txt) form, and a json file form; or
the input device 33 may acquire, from an operation portal of the service apparatus, the advertisement template code of the customized advertisement template and the parameters used by the template that are directly recorded by an advertisement slot provider, and save the advertisement template code and the parameters used by the template.

The processor 31 generates the customized advertisement template according to the advertisement template code and the parameters used by the template that are acquired by the input device 33.

The processor 31 may specifically generate the advertisement template by performing the following steps: 1: generating a parameter list according to the parameters used by the template, where the parameter list includes at least parameter identifiers and parameter names; 2: parsing the parameter list to generate code of a material editing interface, where the generating code of a material editing interface is specifically encapsulating the parameter list into a form, and the form is a part of the code of the material editing interface and is used to carry the parameters used by the template, and each template parameter in the parameter list is used as an input control in the form, where an input control is a standard HTML page element such as a text input box, a file upload button, or a page display item, and a parameter used by a template may correspond to one or more input controls; and 3: saving the material editing interface, the advertisement template code, and the parameter list together as a complete advertisement template.

The parameter list may further include a template name, a parameter type, a parameter check rule (including a text length limit, a file size limit, a text format, check prompt information, and the like), and a parameter default value. When the material editing interface is generated, a JS check script is generated according to the parameter check rule, and when the form is submitted, a parameter whose value is not provided is submitted by using a default value of the parameter.

For a text type parameter, an input box is correspondingly generated in the code of the material editing interface.

For an image type parameter, a file upload control, an image control used to display an uploaded image, and a hidden control used for parameter submission are correspondingly generated in the code of the material editing interface.

For a file type parameter, a file upload control is correspondingly generated in the code of the material editing interface.

When content provided to the server further includes the advertisement preview code and the material page script, each of the advertisement template code, the preview code, and the material page script is a paragraph of HTML script code, including the parameter identifiers of the template; and code of a complete material editing interface that is obtained by combining the material page script and the code of the material editing interface that is generated by the server, and the foregoing parameter list together form a complete advertisement template.

In addition, after generating the customized advertisement template, the processor 31 further generates a template identifier corresponding to the customized advertisement template. The template identifier is used to identify the customized advertisement template, so that during subsequent advertisement placement, when an advertiser specifies an advertisement template for an advertisement slot, the advertiser directly uses a template identifier to notify the server, so that the server may find the corresponding advertisement template according to the template identifier. The output apparatus 34 is configured to return the template identifier to the service apparatus.

The input device 33 is further configured to receive a template identifier specified by the service apparatus, and the processor 31 is further configured to find, according to the template identifier, an advertisement template corresponding to the template identifier, and create an advertisement slot by using the corresponding advertisement template.

The processor 31 may further generate an advertisement material editing interface dynamically according to template parameters and attributes of the customized advertisement template that are provided by the service apparatus. The processor 31 may control receiving and handling of input and output data between components of the server 300.

The memory 32 is configured to store data such as the customized advertisement template generated by the processor 31.

The input device 33 is further configured to receive an advertisement material that is recorded by the advertisement slot provider by using the service apparatus and recorded by the advertiser, and send input information to the processor 31.

The output apparatus 34 receives a processing result returned by the processor 31 and outputs the processing result, and may be specifically implemented as a display apparatus.

The method disclosed in the foregoing embodiments of the present invention may be applied to the processor 31, or implemented by the processor 31. In an implementation process, steps of the foregoing method may be implemented by using an integrated logic circuit of hardware or instructions in a software form in the processor 31. The disclosed methods, steps, and logic block diagrams in the embodiments of the present invention may be implemented or performed. With reference to the methods disclosed in the embodiments of the present invention, steps may be represented directly as being implemented by a hardware decoding processor, or implemented by a combination of hardware and software modules in a decoding processor. The software module may be located in a mature storage medium in the field, such as a random access memory, a flash memory, a programmable read-only memory, an electrically erasable programmable memory, or a register. The storage medium is located in the memory 32, and the processor 31 reads information in the memory 32, and the steps of the foregoing method is performed in combination with the hardware of the processor 31.

It should be noted that the server mentioned in this embodiment of the present invention is an advertisement server supporting template customizing and modification functions. Certainly, besides an existing advertisement server, a template server supporting template customizing and modification functions may be further added, and the template server provides an advertisement service together with the advertisement server. The service apparatus mentioned in this embodiment of the present invention is used in conjunction with the server in implementation and specifically implements a function of an advertisement slot provider.

Based on the server and the service apparatus that are provided by the foregoing embodiments of the present invention, an embodiment of the present invention further provides an advertisement placement system, where the advertisement placement system includes the server provided by any one of the foregoing embodiments and the service apparatus provide by any one of the embodiments, and for specific functions of the server and the service apparatus, refer to the descriptions of the foregoing embodiments, and details are not described herein again.

Through descriptions of the method for configuring an advertisement template, the server, the service apparatus, and the system that are provided by the foregoing embodiments of the present invention, it may be understood that in the present invention, a server acquires advertisement template code of a customized advertisement template and parameters used by the template from a service apparatus, generates the customized advertisement template according to the advertisement template code and the parameters used by the template, and saves the customized advertisement template. In this way, the present invention can implement functions of newly adding and modifying an advertisement template and can adapt to different advertisement form requirements, so that an advertisement type and a presentation form are not limited to a built-in advertisement template of the system, and therefore, an advertisement placement system can be used in a more flexible and diversified manner, and better advertisement placement experience is provided.

In the several embodiments provided in the present invention, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely embodiments of the present invention, and the protection scope of the present invention is not limited thereto. All equivalent structure or process changes made according to the content of this specification and accompanying drawings in the present invention or by directly or indirectly applying the present invention in other related technical fields shall fall within the protection scope of the present invention.

## Claims

1. A method for configuring an advertisement template, wherein the method comprises:
acquiring, by a server, advertisement template code of a customized advertisement template and a parameter used by the template from a service apparatus, wherein the advertisement template code provides a rule system of the advertisement template, and the parameter used by the template provide specific parameter values that need to be used in the advertisement template;
generating, by the server, the customized advertisement template according to the advertisement template code and the parameter used by the template, and saving the customized advertisement template; and
generating, by the server, a template identifier corresponding to the customized advertisement template, and returning the template identifier to the service apparatus, wherein the template identifier is used to identify the customized advertisement template.

2. The method according to claim 1, wherein the step of generating, by the server, the customized advertisement template according to the advertisement template code and the parameter used by the template, and saving the customized advertisement template comprises:
generating, by the server, a parameter list according to the parameter used by the template, wherein the parameter list comprises at least parameter identifiers and parameter names;
parsing the parameter list to generate a material editing interface; and
saving the material editing interface, the advertisement template code, and the parameter list together as the customized advertisement template.

3. The method according to claim 1 or 2, wherein the step of acquiring, by a server, advertisement template code of a customized advertisement template and parameter used by the template from a service apparatus comprises:
receiving, by the server, a template file from the service apparatus, and parsing the template file to obtain the advertisement template code of the customized advertisement template and the parameter used by the template; or acquiring, by the server from an operation portal of the service apparatus, the advertisement template code of the customized advertisement template and the parameter used by the template that are directly recorded by an advertisement slot provider.

4. The method according to any one of claims 1 to 3, wherein the parameter used by the template comprise an advertisement text, an image, a size, a font, a color, video duration, an advertisement click action, and a redirection address.

5. The method according to claim, wherein the method further comprises: receiving, by the server, a template identifier specified by the service apparatus, finding, by using the template identifier, an advertisement template corresponding to the template identifier, and creating an advertisement slot by using the advertisement template corresponding to the template identifier.

6. A server, wherein the server comprises an acquiring module, a template generation module, a saving module, an identifier generation module, and a sending module, wherein
the acquiring module is configured to acquire advertisement template code of a customized advertisement template and parameter used by the template from a service apparatus, wherein the advertisement template code provides a rule system of the advertisement template, and a parameter used by the template provide specific parameter values that need to be used in the advertisement template;
the template generation module is configured to generate the customized advertisement template according to the advertisement template code and the parameter used by the template that are acquired by the acquiring module;
the saving module is configured to save the customized advertisement template;
the identifier generation module is configured to generate a template identifier corresponding to the customized advertisement template, wherein the template identifier is used to identify the customized advertisement template; and
the sending module is configured to return the template identifier to the service apparatus.

7. The server according to claim 6, wherein the server further comprises a receiving module, a searching module, and an advertisement slot creation module, wherein
the receiving module is configured to receive a template identifier specified by the service apparatus;
the searching module is configured to find, by using the template identifier, an advertisement template corresponding to the template identifier; and
the advertisement slot creation module is configured to create an advertisement slot according to the advertisement template corresponding to the template identifier.

8. A server, wherein the server comprises a processor, a memory, an input device, and an output device, wherein the memory, the input device, and the output device are separately connected to the processor, wherein
the input device acquires advertisement template code of a customized advertisement template and a parameter used by the template from a service apparatus;
the processor is configured to generate the customized advertisement template according to the advertisement template code and the parameter used by the template that are acquired by the input device, and generate a template identifier corresponding to the advertisement template, wherein the template identifier is used to identify the customized advertisement template;
the memory is configured to save the customized advertisement template; and
the output device is configured to return the template identifier to the service apparatus.

9. The server according to claim 8, wherein
the input device is further configured to receive a template identifier specified by the service apparatus; and
the processor is further configured to find, by using the template identifier, an advertisement template corresponding to the template identifier, and create an advertisement slot by using the corresponding advertisement template.

10. An advertisement placement system, wherein the advertisement placement system comprises a server and a service apparatus, wherein
the service apparatus is configured to send code of an advertisement template and a parameter used by the template to the server, wherein the code of the advertisement template provides a rule system of the advertisement template, and the parameter used by the template provide specific parameter values that need to be used in the advertisement template; and
the server comprises an acquiring module, a template generation module, a saving module, an identifier generation module, and a sending module, wherein
the acquiring module is configured to acquire advertisement template code of a customized advertisement template and parameter used by the template from the service apparatus;
the template generation module is configured to generate the customized advertisement template according to the advertisement template code and the parameter used by the template that are acquired by the acquiring module, wherein the advertisement template code provides a rule system of the advertisement template, and the parameter used by the template provide specific parameter values that need to be used in the advertisement template;
the saving module is configured to save the customized advertisement template;
the identifier generation module is configured to generate a template identifier corresponding to the customized advertisement template, wherein the template identifier is used to identify the customized advertisement template; and
the sending module is configured to return the template identifier to the service apparatus.
